# EUROPÄISCHE PATENTANMELDUNG

(11) **EP 1 031 289 A2**
(43) Veröffentlichungstag der Anmeldung: **30.08.2000**
(21) Anmeldenummer: 00103102.0
(22) Anmeldetag: 16.02.2000
(51) Int. Cl.: A23N 12/00

(54) **Verfahren und Anlage zur Aufbereitung von Rübenwascherde**

(30) Priorität: 25.02.1999 DE 19908112
(71) Anmelder: Geckert, Kurt, Ing., 3270 Aarberg (CH)
(72) Erfinder: Geckert, Kurt, Ing., 3270 Aarberg (CH)
(74) Vertreter: Gramm, Werner, Prof. Dipl.-Ing.

(57) **Zusammenfassung**

Die Erfindung betrifft ein Verfahren sowie eine Anlage zur Aufbereitung des in der Zuckerindustrie beim Waschen der Rüben anfallenden Erdschlammes. Gemäß der Erfindung wird der zuvor eingedickte Erdschlamm weitgehend von seinem organischen Material befreit, dann mit einer Flockmittellösung vermischt, anschließend einer Nacheindickung unterworfen, nachfolgend noch einmal mit einer Flockmittellösung vermischt und dann filtriert und abgepreßt.

## Beschreibung

Die Erfindung betrifft ein Verfahren sowie eine Anlage zur Aufbereitung des in der Zuckerindustrie beim Waschen der Rüben anfallenden Erdschlammes.

Bei den zur Zeit angewendeten Verfahren erfolgt eine Teilentwässerung der Rübenwascherde mittels Dekanterzentrifugen oder Siebbandpressen. Nachteilig bei diesem Verfahren ist, daß Erde mit thixotroper Struktur anfällt; die nach diesen bekannten Verfahren entwässerte Erde fließt beim Stapeln im Erdlager davon und neigt zu großen Geruchsemissionen bei der Ausbringung auf die Felder. Ferner besteht die Gefahr, daß die Erde mit Rübennematoden und/oder anderen Pilz- und Bakterienkrankheiten verseucht ist.

Der Erfindung liegt die Aufgabe zugrunde, für die Aufbereitung der Rübenwascherde ein effektiveres Verfahren sowie eine effektiver arbeitende Anlage zu entwickeln.

Hinsichtlich des Verfahrens wird diese Aufgabe erfindungsgemäß durch folgende Verfahrenaschritte gelöst:
a) der Erdschlamm wird voreingedickt;
b) aus dem voreingedickten Erdschlamm wird organisches Material ausgesiebt und anschließend zu Feinpülpe ausgepreßt;
c) der entpülpte Erdschlamm wird verhältnisgeregelt mit einer ersten geeigneten Flockmittellösung vermischt und dann einer Nacheindickung unterworfen;
d) zur Erzielung verbesserter Filtrationseigenschaften wird dem nacheingedickten Erdschlamm verhältnisgeregelt eine zweite geeignete Flockmittellösung zugegeben;
e) der so aufbereitete Erdschlamm wird dann filtriert und abgepreßt.

Hinsichtlich der Anlage wird die der Erfindung zugrundeliegende Aufgabe durch folgende Merkmale gelöst:
a) ein Erdabsetzbecken für eine Voreindickung des Erdschlammes;
b) eine über eine Pumpleitung dem Erdabsetzbecken nachgeschaltete Siebmaschine zum Aussieben von organischem Material aus dem Erdschlamm;
c) eine der Siebmaschine nachgeschaltete Siebbandpresse zum Auspressen des zuvor ausgesiebten organischen Materials;
d) an die Siebmaschine ist für den entpülpten Erdschlamm eine Pumpleitung angeschlossen, die eine Einspeisungsstelle für ein Flockungsmittel aufweist und in einen Reaktor mündet;
e) dem Reaktor ist für den aus ihm auslaufenden, mit dem Flockungsmittel vermischten Erdschlamm zu seiner weiteren Eindickung ein Dekanteur nachgeschaltet;
f) an den Dekanteur-Auslauf für den eingedickten geflockten Erdschlamm ist über eine Pumpleitung, die eine Einspeisungsstelle für ein Flockungsmittel aufweist, eine Membranfilterpresse angeschlossen, die einen Druckwasser-Anschluß aufweist;
g) der Membranfilterpresse ist für die erzeugten Erdkuchenplatten eine Zerkleinerungsvorrichtung nachgeschaltet.

Weitere Merkmale der Erfindung sind Gegenstand der Unteransprüche und werden in Verbindung mit weiteren Vorteilen der Erfindung anhand eines Ausführungsbeispieles näher erläutert.

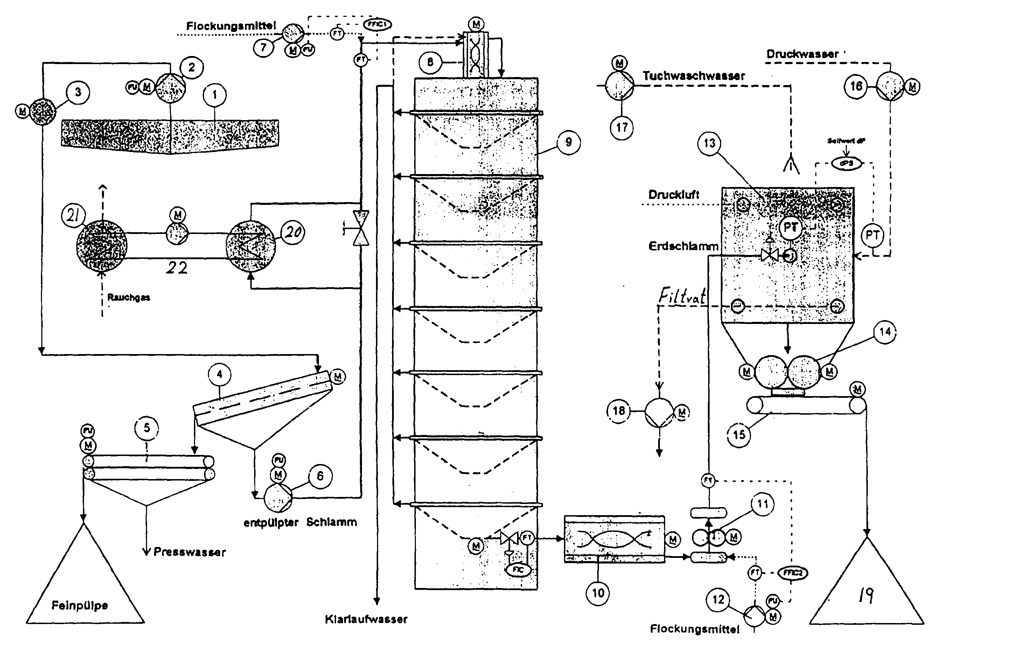

In der Zeichnung ist eine als Beispiel dienende Ausführungsform der Erfindung in Form eines Ablaufschemas einer Rübenwascherde-Entwässerung und -Sterilisation dargestellt.

In einem Erdabsetzbecken 1 erfolgt eine Erdabsetzung und Voreindickung des in der Zuckerindustrie beim Waschen der Rüben anfallenden Erdschlamms auf vorzugsweise 20 - 22 % Trockensubstanzgehalt. Mit einer mengengeregelten Pumpe 2 wird der voreingedickte Erdschlamm sicherheitshalber durch einen Zerkleinerer 3 und von dort zu einer geeigneten Siebmaschine 4 gepumpt. Hier wird aus dem Erdschlamm möglichst viel von dem organischen Material (Rübenfeinteile, Wurzelchen und dergleichen) ausgesiebt und anschließend auf einer Siebbandpresse 5 zu der sogenannten Feinpülpe ausgepreßt, die dann zu Viehfutter verarbeitet oder aber kompostiert werden kann. Das beim Auspressen anfallende Preßwasser ist in der Zeichnung gekennzeichnet.

Über eine Pumpe 6 wird der in der Siebmaschine 4 entpülpte Erdschlamm zusammen mit einer über eine Pumpe 7 eingespeisten Flockmittellösung verhältnisgeregelt zu einem Reaktor 8 gepumpt und dabei miteinander vermischt. Die Flockmittellösung hat vorzugsweise eine Konzentration von 0,1 % und kann - je nach dem Ph-Wert und der Erdzusammensetzung des Erdschlammes - anionisch oder kationisch sein. Der mit dem Flockungsmittel vermischte Erdschlamm läuft aus dem Reaktor 8 über in einen entsprechend dimensionierten Dekanteur 9, wo der Erdschlamm weiter eingedickt wird, vorzugsweise auf etwa 30 - 32 % Trockensubstanzgehalt. Das aus dem Dekanteur 9 abfließende Klarlaufwasser wird vorzugsweise einer Abwasserreinigungsanlage zugeführt oder aber in das Erdabsetzbecken 1 zurückgenommen.

Der im Dekanteur 9 eingedickte geflockte Erdschlamm wird mengengeregelt einer gerührten Maische 10 zugeführt und mit speziellen, die Flocken schonenden Pumpe 11 zu einer Membranfilterpresse 13 gepumpt. Während des Befüllens dieser Membranfilterpresse 13 wird dem Erdschlamm über eine Pumpe 12 verhältnisgeregelt eine geeignete kationische oder anionische Flockmittellösung zugegeben, um so optimale Filtrationseigenschaften zu erzielen.

Die Befüllung der Membranfilterpresse 13 wird nach Erreichen des für diesen Pressentyp zulässigen Fülldruckes, vorzugsweise 12 - 15 bar, beendet; das abpreßbare Restwasser aus der Erde wird mit Hilfe von durch eine Pumpe 16 erzeugten Druckwasser über die Membranen abgepreßt. Das Abpressen wird nach dem Erreichen eines bestimmten Differenzdruckes zwischen dem Druckwasser und dem Erdschlammeinlauf in die Membranfilterpresse 13 beendet. Dabei wird der Sollwert für den Differenzdruck so gewählt, daß der abgepreßte Erdschlamm einen Trockensubstanzgehalt von vorzugsweise 60 % erreicht.

Nach Beendigung des Abpreßvorganges öffnet die Membranfilterpresse 13, und die Erdkuchenplatten fallen in eine Doppelschnecke 14, wo sie zerkleinert und als krümelige, stichfeste Erde von Förderbändern 15 abtransportiert werden beispielsweise zu einem Erdlager 19. Die krümelige Erde kann aber auch direkt den Landwirten zur Rückführung auf die Felder mitgegeben werden.

Die Erde kann aber auch in einer Apparatur auf etwa 70°C erhitzt und auf dieser Temperatur vorzugsweise 15 - 20 Minuten gehalten werden. Wahlweise kann auch der aus der Siebmaschine 4 kommende entpülpte Schlamm vor seiner Vermischung mit dem Flockungsmittel über eine Sterilisierungsapparatur 20, 21 gepumpt werden, die vorzugsweise als Wärmetauscher ausgebildet ist, wobei Rauchgaswärme von den in jeder Zuckerfabrik vorhandenen Dampferzeugern über einen Sekundärkreislauf 22 mit Wasser an den Erdschlamm übertragen wird, um diesen auf etwa 70°C zu erhitzen.

Um eine hohe Filtrationsleistung aufrechtzuerhalten, sollten die speziell für die Rübenwascherde ausgewählten Filtertücher rechtzeitig mit über eine Pumpe 17 angeförderten Tuchwaschwasser gewaschen werden.

Das in der Membranfilterpresse 13 anfallende, noch BSB₅*-belastetes Wasser enthaltende Filtrat wird über eine Pumpe 18 einer biologischen Abwasserreinigung oder aber dem Erdabsetzbecken 1 zugeführt.
* BSB₅ = biochemischer Sauerstoffbedarf nach 5 Tagen

## Patentansprüche

1. Verfahren zur Aufbereitung des in der Zuckerindustrie beim Waschen der Rüben anfallenden Erdschlammes, mit folgenden Verfahrensschritten:
a) der Erdschlamm wird voreingedickt;
b) aus dem voreingedickten Erdschlamm wird organisches Material ausgesiebt und anschließend zu Feinpülpe ausgepreßt;
c) der entpülpte Erdschlamm wird verhältnisgeregelt mit einer ersten geeigneten Flockmittellösung vermischt und dann einer Nacheindickung unterworfen;
d) zur Erzielung verbesserter Filtrationseigenschaften wird dem nacheingedickten Erdschlamm verhältnisgeregelt eine zweite geeignete Flockmittellösung zugegeben;
e) der so aufbereitete Erdschlamm wird dann filtriert und abgepreßt.

2. Verfahren nach Anspruch 1, **dadurch gekennzeichnet**, daß die Voreindickung des Erdschlammes auf, etwa 20 - 22 % Trockensubstanzgehalt erfolgt.

3. Verfahren nach Anspruch 1 oder 2, **dadurch gekennzeichnet**, daß die Voreindickung in einem Erdabsetzbecken erfolgt.

4. Verfahren nach Anspruch 1, 2 oder 3, **dadurch gekennzeichnet,** daß der voreingedickte Erdschlamm vor der Aussiebung seines organischen Materials durch einen Zerkleinerer gepumpt wird.

5. Verfahren nach einem der vorhergehenden Ansprüche, **dadurch gekennzeichnet**, daß die Feinpülpe zu Viehfutter verarbeitet oder kompostiert wird.

6. Verfahren nach einem der vorhergehenden Ansprüche, **dadurch gekennzeichnet**, daß die erste Flockmittellösung eine Konzentration von etwa 0,1 % aufweist.

7. Verfahren nach einem der vorhergehenden Ansprüche, **dadurch gekennzeichnet**, daß die Nacheindickung des Erdschlamms auf etwa 30 - 32 % Trockensubstanzgehalt erfolgt.

8. Verfahren nach einem der vorhergehenden Ansprüche, **dadurch gekennzeichnet**, daß das Filtrieren und Abpressen des mit der zweiten Flockinittellösung vermischten Erdschlamms in Membranfilterpressen erfolgt, in denen nach ihrer Befüllung bis zu einem Fülldruck von etwa 12 - 15 bar das abpreßbare Restwasser aus der Erde mittels Druckwasser über die Membranen abgepreßt wird.

9. Verfahren nach Anspruch 8, **dadurch gekennzeichnet**, daß das Abpressen bis zum Erreichen eines bestimmten Differenz-druckes zwischen Druckwasser und Erdschlammeinlauf erfolgt, wobei der Sollwert für diesen Differenzdruck so gewählt wird, daß der abgepreßte Erdschlamm einen Trockensubstanzgehalt von etwa 60 % erreicht.

10. Verfahren nach einem der vorhergehenden Ansprüche, **dadurch gekennzeichnet**, daß das beim Filtrieren und Abpressen des mit der zweiten Flockmittellösung vermischten Erdschlamms abfließende Klarlaufwasser einer Abwasserreinigungsanlage zugeführt oder in den Voreindickungsbereich zurückgenommen wird.

11. Verfahren nach einem der vorhergehenden Ansprüche, **dadurch gekennzeichnet**, daß der abgepreßte Erdschlamm nach seiner Zerkleinerung als krümelige, stichfeste Erde zu einem Erdlager transportiert oder den Landwirten zur Rückführung auf die Felder zugeführt wird.

12. Verfahren nach einem der vorhergehenden Ansprüche, **dadurch gekennzeichnet**, daß die am Ende der Aufbereitung anfallende Erde auf etwa 70°C erhitzt und auf dieser Temperatur etwa 15 bis 20 Minuten gehalten wird.

13. Verfahren nach einem der Ansprüche 1 - 11, **dadurch gekennzeichnet**, daß der entpülpte Erdschlamm vor seiner Vermischung mit der ersten Flockmittellösung auf etwa 70°C erhitzt und dadurch sterilisiert wird.

14. Anlage zur Aufbereitung des in der Zuckerindustrie beim Waschen der Rüben anfallenden Erdschlammes, mit folgenden Merkmalen:
a) ein Erdabsetzbecken (1) für eine Voreindickung des Erdschlammes;
b) eine über eine Pumpleitung dem Erdabsetzbecken (1) nachgeschaltete Siebmaschine (4) zum Aussieben von organischem Material aus dem Erdschlamm;
c) eine der Siebmaschine (4) nachgeschaltete Siebbandpresse (5) zum Auspressen des zuvor ausgesiebten organischen Materials;
d) an die Siebmaschine (4) ist für den entpülpten Erdschlamm eine Pumpleitung angeschlossen, die eine Einspeisungsstelle für ein Flockungsmittel aufweist und in einen Reaktor (8) mündet;
e) dem Reaktor (8) ist für den aus ihm auslaufenden, mit dem Flockungsmittel vermischten Erdschlamm zu seiner weiteren Eindickung ein Dekanteur (9) nachgeschaltet;
f) an den Dekanteur-Auslauf für den eingedickten geflockten Erdschlamm ist über eine Pumpleitung, die eine Einspeisungsstelle für ein Flockungsmittel aufweist, eine Membranfilterpresse (13) angeschlossen, die einen Druckwasser-Anschluß aufweist;
g) der Membranfilterpresse (13) ist für die erzeugten Erdkuchenplatten eine Zerkleinerungsvorrichtung (14) nachgeschaltet.

15. Anlage nach Anspruch 14, **dadurch gekennzeichnet**, daß zwischen Erdabsetzbecken (1) und Siebmaschine (4) ein Zerkleinerer (3) geschaltet ist.

16. Anlage nach Anspruch 14 oder 15, **dadurch gekennzeichnet**, daß die die Siebmaschine (4) mit dem Reaktor (8) verbindende Pumpleitung über eine Sterilisierungsapparatur (20, 21, 22) geführt ist.

17. Anlage nach Anspruch 14, 15 oder 16, **dadurch gekennzeichnet**, daß der Dekanteur-Auslauf in eine gerührte Maische (10) mündet.

18. Anlage nach einem der Ansprüche 14,bis 17, **dadurch gekennzeichnet**, daß in die den Dekanteur-Auslauf bzw. die Maische (10) mit der Membranfilterpresse (13) verbindende Pumpleitung flockenschonende Pumpen (11) geschaltet sind.
